## Europäisches Patentamt
## European Patent Office
## Office européen des brevets

(19)

(11) Veröffentlichungsnummer: **0 365 844**
**A2**

(12) # EUROPÄISCHE PATENTANMELDUNG

(21) Anmeldenummer: **89117693.5**

(22) Anmeldetag: **25.09.89**

(51) Int. Cl.5: **C08G 59/17 , C09D 163/10**

(30) Priorität: **28.10.88 DE 3836799**

(43) Veröffentlichungstag der Anmeldung:
**02.05.90 Patentblatt 90/18**

(84) Benannte Vertragsstaaten:
**BE DE FR GB IT NL**

(71) Anmelder: **Siemens Aktiengesellschaft**
**Wittelsbacherplatz 2**
**D-8000 München 2(DE)**

(72) Erfinder: **Budde, Klaus, Dr.**
**Ottobrunner Strasse 5**
**D-8025 Unterhaching(DE)**
Erfinder: **Koch, Friedrich**
**Schönstrasse 63a**
**D-8000 München 90(DE)**
Erfinder: **Quella, Ferdinand, Dr.**
**Cramer-Klett-Strasse 2**
**D-8014 Neubiberg(DE)**

(54) **Gut aushärtbarer Photolack.**

(57) Es wird ein strahlungsvernetzbarer Lack auf der Basis eines Furanacrylsäurereste aufweisen den Epoxidharzes angegeben, der einen, zumindest zum Teil mit Furanacrylsäure veresterten niedermolekularen Alkohol, einen thermolabilen, als Radikalstarter geeigneten Initiator sowie gegebenenfalls weitere für Photolacke übliche Zusätze und Füllstoffe enthält. Der neue Lack vereinigt die Vorteile von thermisch und durch Strahlung vernetzbaren Lacken und erschließt durch Kombination der beiden Härtungsverfahren neue Anwendungsgebiete. Insbesondere in Kombination mit Füllstoffen kann der neue Lack als Abdeck- oder Abdichtlack für elektronische Bauelemente dienen.

EP 0 365 844 A2

## Gut aushärtbarer Photolack.

Die Erfindung betrifft einen strahlungsvernetzbaren Lack auf der Basis eines Furanacrylsäurereste aufweisenden Epoxidharzes sowie dessen Verwendung.

Strahlungsvernetzbare Lacke oder auch Photolacke genannt werden zum Beispiel in der Elektronikindustrie für integrierte Schaltungen oder andere elektronische Bauelemente als Abdeckschicht verwendet. Im gehärteten Zustand soll eine solche Photolackschicht die darunterliegende Schaltung vor Umgebungseinflüssen schützen, zum Beispiel vor Feuchtigkeit, Lösungsmitteln, mechanischer Einwirkung oder auch nur vor unerwünschter Einsichtnahme.

Eine solche Abdeckschicht wird zum Beispiel direkt über einer Schaltung erzeugt, indem Photolack in flüssiger Form über der Schaltung aufgetragen und anschließend durch Strahlung vernetzt und somit gehärtet wird. Die Vernetzung setzt strahlungsempfindliche Gruppen im Photolack voraus und kann durch Licht, UV- oder auch höherenergetische Strahlung wie zum Beispiel Elektronen-oder Röntgenstrahlung erfolgen. Ein geeigneter Photolack muß verschiedene Bedingungen erfüllen. So werden zum Beispiel gute elektrisch isolierende Eigenschaften und eine niedrige Dielektrizitätskonstante gefordert. Gegenüber den im Herstellungsprozeß oder im Betrieb eines mit Photolack abgedeckten Bauelements auftretenden Temperaturen sollte der Lack unempfindlich sein und auch keinen allzu großen Temperaturausdehnungskoeffizienten besitzen. Auch eine ausreichende mechanische Festigkeit, zum Beispiel gegen Abrieb, und Beständigkeit gegenüber Feuchtigkeit sind notwendig.

Ein strahlungsvernetzbares Polymersystem, welches sich zum Beispiel zum Aufbau von mehrschichtigen Mikroverdrahtungen eignet, ist aus der europäischen Patentanmeldung E-PA-0 281 808 bekannt. Grundlage des dort beschriebenen Polymersystems ist ein Epoxidharz, nämlich ein Diglycidylether auf der Basis von Bisphenol A. Durch Veresterung der reaktiven OH- und Epoxidgruppen mit Abkömmlingen von Acrylsäure, zum Beispiel mit Furanacrylsäure, werden strahlungsempfindliche Gruppen in das Polymersystem eingeführt. Durch Zusatz niedermolekularer, polyfunktioneller und ebenfalls strahlungsreaktiver sogenannter Vernetzungsverstärker oder Modifier lassen sich gezielt thermische und mechanische Eigenschaften des (gehärteten) Photolacks einstellen. Geeignete Modifier sind zum Beispiel die Acrylate von Mehrfachalkoholen.

Diese und andere Photolacke erfüllen zwar einen Großteil der an sie gestellten Forderungen, doch weisen sie auch noch Nachteile auf. So erfordert die Strahlenhärtung einen relativ hohen finanziellen und auch verfahrenstechnischen Aufwand. Die Photolackschichten können nur in geringer Schichtdicke aufgebracht werden, da sonst eine vollständige Aushärtung erschwert wird. Auch können durch abzudeckende Bauelemente Abschattungen der zum Härten eingesetzten Strahlung auftreten, die in der Photolackschicht zu nicht oder nur unvollständig gehärteten Bereichen führen. Diese wiederum weisen schlechtere mechanische und elektrische Eigenschaften auf, als Bereiche mit vollständig gehärtetem Photolack. Auch ist aufgrund der geforderten Durchlässigkeit des Photolacks für die zur Härtung eingesetzte Strahlung ein Zusatz von Füllstoffen eingeschränkt. Für verschiedene Anwendungen sind zur Verbesserung der Eigenschaften von Abdeckschichten Füllstoffe jedoch unerläßlich.

Aufgabe der vorliegenden Erfindung ist es daher, einen strahlungsvernetzbaren Lack anzugeben, der die beschriebenen elektrischen und mechanischen Eigenschaften erfüllt und der zusätzlich noch thermisch nachgehärtet werden kann.

Diese Aufgabe wird durch einen Lack der eingangs genannten Art erfindungsgemäß dadurch gelöst, daß im Lack weiterhin enthalten sind
- ein zumindest zum Teil mit Furanacrylsäure veresterter niedermolekularer Alkohol,
-ein thermolabiler, als Radikalstarter geeigneter Initiator sowie
-gegebenenfalls weitere für Photolacke übliche Zusätze oder Füllstoffe.

Weiterhin liegt es im Rahmen der Erfindung, daß der niedermolekulare Alkohol Pentaerythrit oder Dipentaerythrit ist. Weitere Ausgestaltungen der Erfindung sind den Unteransprüchen zu entnehmen.

Grundlage der Erfindung ist die Entdeckung, daß in Furanacrylsäurereste enthaltenden Systemen neben der photochemisch ausgelösten (2 + 2)-Cycloaddition ein weiterer, über radikalische Zwischenstufen verlaufender Reaktionsweg existiert. Erfindungsgemäß wird dem Lack daher eine thermisch in Radikalfragmente zerfallende Verbindung beigefügt, welche oberhalb einer bestimmten Temperatur zu zerfallen beginnt, eine (Radikal-) Reaktion der Furanacrylsäurereste auslöst und so zur Vernetzung bzw. Härtung des Lackes führt. Ein solches System, dessen olefinische Gruppen sowohl durch Strahlung als auch thermisch vernetzbar sind, war bisher nicht bekannt. Vielmehr ist aus Untersuchungen bekannt, daß zum Beispiel Zimtsäurereste tragende Polymere nicht einmal mit Vernetzungsverstärkern reagieren. Es ist deshalb überraschend, daß mit der chemisch verwandten Furanacrylsäure veresterte niedermolekulare mehrfunktionelle Alkohole mit Furanacrylsäure enthaltenden Epoxidharzen vernetzen.

Neu und überraschend ist weiterhin, daß die mit Furanacrylsäure veresterten Vernetzungsverstärker die Glastemperatur des gehärteten Photolacks verbessern und außerdem die Reaktionsgeschwindigkeit der Vernetzungsreaktion (unter Stickstoff) erhöhen. Bei bekannten Systemen wurde mit Vernetzungsverstärkern dagegen eine Absenkung der Glasübergangstemperatur beobachtet, der reaktive Verdünner wirkte also wie ein eingebauter Weichmacher. Auch sind diese auf Acrylatbasis bestehenden Systeme praktisch ohne Einfluß auf die Geschwindigkeit der Härtungsreaktion. Wei terhin wurden bei bekannten Furanacrylsäure enthaltenden Epoxidharzen nahezu gleiche Reaktionsgeschwindigkeiten unter Luft und Stickstoffatmosphäre gemessen.

Mit dem erfindungsgemäßen Lack werden also folgende zusätzliche Vorteile erzielt:
- Die Reaktionsgeschwindigkeit läßt sich über
     a) die Vernetzerkonzentration,
     b) Stickstoff- oder
     c) Lufteinfluß steuern. - Mit den erfindungsgemäßen Vernetzern, welche im Gegensatz zu bekannten reaktiven Verdünnern meist fest sind, lassen sich nicht-klebende Lacke erzeugen.
- Die Lacke sind langzeitig stabil sowie im Dunkeln bereits bei 60° C thermisch härtbar.
- Bezüglich der für die Verwendung wichtigen elektrischen Eigenschaften und der Temperaturbeständigkeit der erfindungsgemäßen Photolacke ergeben sich günstigere Werte als für die eingesetzten Epoxidharze ohne Vernetzer.

Die Auswahl der einsetzbaren Epoxidharze ist innerhalb des Erfindungsgedankens theoretisch unbegrenzt, wird aber durch die jeweilige Anwendung bzw. die daraus abgeleiteten Materialanforderungen mitbestimmt. Für elektronische Anwendungen ist das Epoxidharz vorteilhafterweise vom Glycidylethertyp auf der Basis von Bisphenolen, zum Beispiel Bisphenol A oder Kresolnovolak. Solche Epoxidharze, die erfindungsgemäß dann allerdings mit Furanacrylsäure verestert sind, sind zum Beispiel der bereits zitierten europäischen Patentanmeldung E-PA 0 281 808 oder der älteren E-PA 0 167 051 zu entnehmen.

Die Auswahl des thermolabilen in Radikale zerfallenden Initiators kann im Prinzip beliebig erfolgen. Jedoch werden über die Zerfallstemperatur des Initiators die Temperaturbedingungen für die thermische Aushärtung bestimmt und die Auswahl dadurch eingeschränkt. Besonders sind jedoch Initiatoren mit labilen Kohlenstoff-Kohlenstoffbindungen wie zum Beispiel Derivate des Benzpinakols bevorzugt. Solche bekannte Systeme enthalten zum Beispiel zwei benachbarte tertiäre C-Atome und sind zumeist um diese Bindung symmetrisch. Andere geeignete Initiatoren weisen Azogruppen auf, zum Beispiel Azobisisobutyronitril, oder besitzen eine Peroxidgruppe wie zum Beispiel tertiär-Butylperoxid. Im fertigen Photolack ist der Initiator vorteilhafterweise in einem Anteil von ca. 0,1 bis 5,0 Gewichtsprozent (bezogen auf Epoxidharz plus reaktiven Verdünner) enthalten.

Für verschiedene Anwendungen ergeben sich durch die Zumischung eines Füllstoffes weitere Vorteile, da dieser insbesondere mechanische Eigenschaften des Lacks verbessert. Der Füllstoff kann frei und den Anforderungen an den Photolack entsprechend gewählt werden. Beispielhaft und nicht einschränkend seien hier nur angeführt: Quarzmehl, feindisperses Siliziumdioxid, verschiedenartig gestaltete Glaskörper einschließlich Glaswolle, Ruß, Pigmente sowie eine Vielzahl natürlicher mineralischer oder auch organischer Feststoffe. Die Füllstoffgehalte können zwischen 0 und 60 Gewichtsprozent des fertigen Photolacks liegen.

Füllstoff enthaltende Photolacke übertreffen entsprechend ungefüllte Lacke in einigen Eigenschaften, insbesondere bezüglich Temperaturausdehnungskoeffizient, Schlagfestigkeit oder anderen mechanischen Parametern. Für den erfindungsgemäßen Lack erschließen sich daher weitere Anwendungsbereiche, für die bekannte ungefüllte Lacke nicht geeignet waren. Zum Beispiel als Tropfenabdeckmasse kann der erfindungsgemäße Photolack mit einem hohen Füllstoffgrad und mit bisher nicht möglicher hoher Schichtdicke eingesetzt werden. Bei rein thermisch härtenden Abdeckmassen besteht bei dieser Anwendung immer dann die Gefahr des Verfließens der aufgebrachten Lackschicht, wenn die Temperatur auf den für die Härtungsreaktion erforderlichen Wert angehoben wird. Der erfindungsgemäße Lack dagegen kann in einem "kalten" Prozeß durch Strahlung vorgehärtet werden. Dabei werden zwar nur die äußersten der Strahlung ausgesetzten Bereiche der Abdeckschicht gehärtet, was aber trotzdem zu einer Formstabilität der Abdeck schicht oder des Abdecktropfens führt, der dann die nachfolgende thermische Härtung ohne Verfließen übersteht.

Vorhärtung von aufgetragenem Photolack mittels Strahlung und anschließende thermische Nachbehandlung ist außerdem bei solchen Lackzusammensetzungen von Vorteil, deren Durchlässigkeit für die zur Härtung verwendete Strahlung niedrig ist. Aber auch dann, wenn mit dem Photolack zum Beispiel eine Oberfläche mit "anspruchsvoller Topographie" abgedeckt werden soll, bringt eine kombinierte Härtung Vorteile. Weist eine zu bedeckende Oberfläche steile Flanken oder gar Unterschnitte auf, so ist eine vollständige Vernetzung des Lackes durch Strahlung nur bei isotroper Verteilung der Einfallswinkel der Strahlung möglich, da nur dann Abschattungen vermieden werden. Bei thermischer Nachhärtung kann eine apparativ einfach durchzuführende oberflächliche Belichtung durchgeführt werden. Der nachfolgende thermische Härtungsprozeß verläuft vollständig und erzeugt daher auch keine Abschattungen. Dies vereinfacht das Verfahren und führt nicht zuletzt wegen der kürzeren Bestrahlungszeiten zu Kosteneinsparungen.

Die Harze eignen sich auch als Bindemittel für UV-härtende Tinten. Üblich sind Farbstoffkonzentrationen von ca. 1 bis maximal 10 Prozent Massenanteil. Sofern die Farbstoffe UV-durchlässig sind, ist jeder beliebige Farbstoff einsetzbar. Als Thixotropierungsmittel kann zum Beispiel Siliziumdioxid zugesetzt werden. Weitere Bestandteile sind mehrfunktionelle niedermolekulare Vernetzer und Sensibilisatoren, deren Konzentrationen im üblichen Rahmen bei ca. 1 bis 5 Prozent, bezogen auf das Harz, liegen. Für Tinten kommen im allgemeinen nur leicht flüchtige Lösungsmittel wie Dichlormethan oder Methylethylketon in Frage.

Eine erfolgversprechende Anwendung derartiger Tinten ist mit der Beschriftung von Kunststoffen gegeben. Als lösungsmittelbeständige und bei Raumtemperatur verarbeitbare Tinte bietet sie neue Vorteile gegenüber herkömmlichen Tinten. Auch als Stempelfarbe ist der neue Photolack gut zu verwenden. In der Elektronik bzw. Elektronikindustrie ist diese Art des Substanzauftrages ein häufig eingesetztes Verfahren. Die Bezeichnung Farbe ist aber nur im übertragenen Sinn zu sehen, Farbstoff muß nicht enthalten sein.

Ein weiterer Einsatz für den UV-härtenden Lack ist als Tinte für Ink-Jet Verfahren gegeben. Diese auch über eine Computersteuerung mögliche Art der Substanzauftragung ist exakt, reproduzierbar und schnell. In Verbindung mit neuerdings bekannten flüssigen, thermisch zersetzbaren metallorganischen Verbindungen ist zur Definition bzw. Herstellung von Leiterbahnen auch ein Ersatz der bisher angewendeten Siebdrucktechnik mit metallhaltigen Pasten durch die neuen Ink-Jet Verfahren denkbar. Weitere Möglichkeiten für einen derartigen Einsatz des neuen Photolacks sind dem Artikel von K. F. Teng und R. W. Vest "Liquid Ink Jet Printing with MOD Inks for Hybrid Microcircuits", in IEEE Transactions on Components, Hybrids, and Manufactoring Technology, Vol. CHMT-12, No. 4, Dec. 1987, Seite 545 bis 549, zu entnehmen.

Im folgenden wird die Erfindung anhand einiger Ausführungsbeispiele noch näher erläutert.

Ausführungsbeispiele:

Herstellung des Grundharzes

Die Veresterung eines Hydroxylgruppen haltigen Epoxidharzes auf Bisphenol-A-Basis (mittleres Molgewicht ca. 5000, 18 veresterbare OH-Gruppen) wird mit dem zweifachen Überschuß an Furanacrylsäurechlorid nach literaturbekannten Vorschriften durchgeführt. Das Harz wird in Folge FEB-Harz genannt.

1. Ausführungsbeispiel

Zunächst wird eine 10 Gewichtsprozent enthaltende Lösung von FEB-Harz in Xylol hergestellt. Als weitere Bestandteile, deren Anteil als Gewichtsprozent bezogen auf die Masse des Harzes angegeben ist, werden 2 Prozent Michler's Keton und 1 bis 5 Prozent eines Vernetzers, zum Beispiel Bisphenol-A-Furanacrylsäure zugesetzt. Diese Mischungen werden auf standardisierten Test mustern aufgetragen und getrocknet. Nach 50 Minuten Bestrahlung wird der Umsatz bzw. der Grad der Vernetzung durch Infrarotspektroskopie bestimmt. In Abhängigkeit von der Konzentration des zugegebenen Vernetzers werden folgende Umsätze gemessen:

| Vernetzerkonzentration | Umsatz unter Luft | Umsatz unter $N_2$ |
|---|---|---|
| 1 Prozent | 70 Prozent | 55 Prozent |
| 5 Prozent | 50 Prozent | 80 Prozent |

Das unter Luft und Stickstoff gegenläufige Härtungsverhalten des Photolacks läßt sich zur Steuerung der Aushärtegeschwindigkeit einsetzen. Die Glasübergangstemperaturen liegen zwischen 130 und 150° C.

2. Ausführungsbeispiel:

Eine 30 Gewichtsprozent FEB-Harz enthaltende Lösung in Xylol wird mit 2 Prozent Michler's Keton, 30 Prozent Siliziumdioxid (Aerosil), 5 Prozent Vernetzer und 1 Prozent Benzpinakol versetzt, wobei sich die Angaben auf die Masse des eingesetzten Harzes beziehen. Diese Lösung wird in Tropfen von 5 mm Grundfläche auf ein Substrat aufgebracht und zwei Stunden bei erhöhter Temperatur getrocknet. Nach 10 Minuten UV-Bestrahlung sind die Tropfen fixiert. Die vollständige Aushärtung erfolgt thermisch (zum Beispiel 2 Stunden/120° C).

Diese Mischung kann zum Beispiel bei Oberflächenmontage (SMD-Technik) eingesetzt werden. Nach einer Fixierung der Tropfen mittels UV-Strahlung werden diese beim anschließenden Lötbad in 20 bis 30 Sekunden nahezu vollständig ausgehärtet und erfordern daher keinen weiteren Härtungsschritt.

3. Ausführungsbeispiel:

Zur Herstellung einer UV-härtenden Tinte werden 1 Gewichtsprozent FEB-Harz, welches mit 2 Prozent Michler's Keton und 2 Prozent Vernetzer (bezogen auf das Harz) versetzt ist, ca. 1 Gewichtsprozent Aerosil ($SiO_2$) und ein Farbstoff, welcher für UV-Licht von 365 nm durchlässig ist in einem Lösungsmittel (zum Beispiel Dichlormethan) gelöst. Die Farbstoffkonzentration wird in Abhängigkeit vom Farbstoff bemessen und beträgt bis ca. 5 Gewichtsprozent. Auf die Zugabe einer thermolabilen Verbindung wird in diesem Ausführungsbeispiel verzichtet, da für die Anwendung als Tinte (in entsprechend dünner Schicht) keine thermische Nachhärtung vorgesehen ist.

Eine nach dieser Vorschrift hergestellte Tinte wird nach dem Druck mittels UV-Licht in wenigen Sekunden fixiert.

**Ansprüche**

1. Strahlungsvernetzbarer Lack auf der Basis eines Furanacrylsäurereste aufweisenden Epoxidharzes, **dadurch gekennzeichnet, daß** im Lack weiterhin enthalten sind
- ein zumindest zum Teil mit Furanacrylsäure veresterter niedermolekularer Alkohol
- ein thermolabiler als Radikalstarter geeigneter Initiator sowie
- gegebenenfalls weitere für Photolacke übliche Zusätze oder Füllstoffe.

2. Lack nach Anspruch 1, **dadurch gekennzeichnet,** daß der niedermolekulare Alkohol Pentaerythrit oder Dipentaerythrit ist.

3. Lack nach Anspruch 1 oder 2, **dadurch gekennzeichnet,** daß der Initiator eine thermolabile Kohlenstoff-Kohlenstoffbindung aufweist.

4. Lack nach Anspruch 1 oder 2, **dadurch gekennzeichnet,** daß der Initiator eine thermolabile Azo- oder Peroxidfunktion trägt.

5. Lack nach mindestens einem der Ansprüche 1 bis 4, **dadurch gekennzeichnet,** daß der Initiator in einem Anteil von 0,1 bis 5,0 Gewichtsprozent, bezogen auf das Polymer, enthalten ist.

6. Lack nach mindestens einem der Ansprüche 1 bis 5, **dadurch gekennzeichnet,** daß das Epoxidharz vom Glycidylethertyp ist auf der Basis von Bisphenol A oder Kresolnovolak.

7. Lack nach mindestens einem der Ansprüche 1 bis 6, **da durch gekennzeichnet,** daß der Lack 0 bis 60 Gewichtsprozent Füllstoff enthält.

8. Lack nach Anspruch 7, **dadurch gekennzeichnet,** daß als Füllstoff ein Pigment enthalten ist.

9. Verwendung des Lackes nach mindestens einem der Ansprüche 1 bis 8 zum Abdecken oder Abdichten elektronischer Bauelemente.

10. Verwendung des Lackes nach Anspruch 8 als hochgefüllte Tinte.